# EUROPEAN PATENT SPECIFICATION

(11) **EP 2 433 021 B1**
(45) Date of publication and mention of the grant of the patent: **22.05.2013**
(21) Application number: 11711063.5
(22) Date of filing: 21.03.2011
(51) Int. Cl.: F16B 19/00, F16B 21/07, F16B 5/06

(54) **FASTENING METHOD AND FASTENING SYSTEM**
BEFESTIGUNGSVERFAHREN UND BEFESTIGUNGSSYSTEM
MÉTHODE DE FIXATION ET SYSTÈME DE FIXATION

(30) Priority: 19.05.2010 DE 102010021278
(43) Date of publication of application: 28.03.2012
(73) Proprietor: Newfrey LLC, Newark, Delaware 19711 (US)
(72) Inventor: SENG, Hans-Peter, 35394 Giessen (DE); GERLACH, Wolfgang, 35394 Giessen (DE); PIMPER, Ralf, 35394 Giessen (DE); SCHUG, Alexander, 35394 Giessen (DE)
(74) Representative: Witte, Weller & Partner
(86) International application number: PCT/EP2011/054174
(87) International publication number: WO 2011/144373

(56) References cited:
- US-A1- 2008 238 145

## Description

The present invention relates to a method for securing an article to a component in a defined position and to a fastening system which has a joining element which is to be joined to the component and a clip which is to be fastened to the joining element, wherein an article can be fixed to the clip.

Such fastening methods and systems are generally known. As a rule, the joining elements are designed as studs which are generally rotationally symmetrical about a longitudinal axis and which can be joined, for example, by stud welding (short-time arc welding). However, it is also known to connect such joining elements to the components by thermoplastic welding or by adhesive bonding.

The abovementioned stud welding is a process which is established in particular in the automobile industry and by means of which such studs can be welded, for example, to body sheets. The welding studs then serve as anchors for further fastening elements, in particular for plastic clips, which are latched in place on the stud and serve to secure articles or the like.

The article to be secured can be, for example, an elongated article, such as, for example, a cable harness or the like, which is to be secured to the component substantially parallel to a surface of the component in a defined securing direction.

As a rule, the joining elements used in the prior art in the form of studs permit any desired fastening of the clip in the direction of rotation about the longitudinal axis of the joining element. Fastening by means of only one joining element of this kind is therefore not able to ensure a defined positional orientation of the securing of the article to the component. It is therefore known to enable the positional orientation by 2-point fixing.

A securing method according to the preamble of claim 1 and a fastening of system according to the preamble of claim 4 are known from US 2008/238145 A1.

It is therefore one object of the invention to specify an improved method for securing an article to a component in a defined positional orientation and an improved fastening system.

The above object is achieved firstly by a method for securing an article to a component in a defined positional orientation, comprising the steps: joining a joining element to a surface of the component by means of a joining head, fastening a clip to the joining element, and fixing the article to the clip, wherein the joining element has a polygonal section and, during the joining operation, is held on the joining head in a position defined by the polygonal section and is joined to the surface of the component, and wherein the clip has a polygonal anti-rotation locking section and can be fastened to the joining element in such a way that an article to be fixed to the clip can be secured to the component in a defined positional orientation.

Furthermore, the above object is achieved by a fastening system for securing an article to a component, comprising a joining element which is generally rotationally symmetrical about a longitudinal axis and which has a polygonal section and can be joined to the component in the longitudinal direction, and comprising a clip which has a fastening section for fastening the clip to the joining element, a polygonal anti-rotation locking section for bearing against the polygonal section in a rotationally locked manner, and a securing section for securing the article to the clip, wherein the joining element has a head which is at a distance from the polygonal section in the longitudinal direction and on which the fastening section of the clip engages.

Furthermore, the above object is achieved by a joining element for such a fastening system, in particular in the form of a stud, wherein the joining element is designed as a joining element which is generally rotationally symmetrical about a longitudinal axis and which has at one longitudinal end a joining section, by means of which the joining element can be joined to a component, and which furthermore has a head at the other longitudinal end and which has a polygonal section between the longitudinal ends, wherein the head has a radial shoulder for fastening a clip.

Finally, the above object is achieved by a clip for a fastening system of the above-mentioned type and/or for clipping onto a joining element of the abovementioned type, wherein the clip has a polygonal anti-rotation locking section and a fastening section connected thereto, wherein the fastening section has at least one latching tongue which extends in a direction away from the anti-rotation locking section and is designed to engage behind a radial shoulder of an associated joining element.

With the method according to the invention for securing an article to a component in a defined positional orientation or with the fastening system according to the invention, it is possible to secure the article to the component in the defined positional orientation by means of only a single joining element.

The joining element has in this case a polygonal section which enables the joining element to be held in a defined positional orientation during the joining operation and consequently enables it to be joined to the component in a defined positional orientation. Furthermore, the clip has a polygonal anti-rotation locking section which interacts with the polygonal section of the joining element, so that it is possible to fasten the clip to the joining element in a defined positional orientation. A defined positional orientation of the clip with respect to the component is thereby achieved in turn, which in turn enables the article to be secured to the clip or the component in a defined positional orientation.

The joining operation is preferably carried out in an automated manner, for example by means of a robot or a stationary welding unit. By suitable control of such an automated welding unit, it is possible to join the joining head and a joining element held thereon in a specific positional orientation to the component in a specific rotary orientation. During the automated joining operation, the joining elements are fed to the joining head preferably in an automated manner, for example by means of compressed air. A holding device as disclosed in document DE 10 2006 048 320 A1 can serve to hold the joining component in a defined rotary position with respect to the joining head.

In addition, in such an automated welding system, care is preferably taken to ensure that such a holding device is fastened to the joining head in a defined positional orientation, so that the automated welding system, on account of this defined attachment, "knows" the orientation of the direction of rotation in which the joining element is located in the joining head.

Furthermore, in the fastening system according to the invention, it is advantageous that the clip is also held in a rotationally locked manner on the joining element in the clipped-on state by the polygonal anti-rotation locking section, so that the defined positional orientation of the article on the component, once established, is lastingly retained.

In the securing method according to the invention, it is possible on the one hand to first of all join the joining element to the surface of the component and then fasten the clip to the joining element. However, it is also possible to fasten the clip to the joining element beforehand and then join the pre-assembled fastening arrangement consisting of joining element and clip to the surface of the component via the joining section of the joining element.

In this case, it is for example conceivable to provide a circumferential radial recess on the head of the joining element, wherein a fastening section of the clip engages on predetermined sections of this radial recess, and wherein it is possible for a holding device of the joining tool to engage on another part of the radial recess in the circumferential direction via openings in the clip. In this way, a pre-assembled fastening arrangement consisting of joining element and clip can be taken hold of by a joining tool, in particular a stud welding tool, and can be joined to the surface of the component. In particular, it is possible here during the stud welding to conduct a welding current into the joining element via the contact between the joining tool and the head.

The clip according to the invention is preferably a one-piece component, in particular made of a plastic material. Alternatively, however, the clip can also be formed of several parts. For example, the anti-rotation locking section can be formed on a first clip part, whereas the fastening section is formed on a second clip part.

The object is therefore completely achieved.

In the fastening system according to the invention, it is especially advantageous if the securing section is designed to secure the article to the clip in a securing axis which runs transversely to the longitudinal axis of the joining element.

In such a fastening system, the securing section is often arranged laterally offset from the longitudinal axis of the clip or of the joining element, such that the securing axis can in particular be skewed relative to the longitudinal axis of the joining element.

In the case of the joining element according to the invention, it is especially advantageous if said joining element has a flange section, on the underside of which the joining section is formed, and has a shank section which has a smaller diameter than the flange section, wherein the head is formed on the shank section.

In this embodiment, it can be ensured that the joining element can be held in a defined positional orientation by a holding device of a joining head without said holding device interacting with the head on which the fastening section of the clip engages.

According to a further preferred embodiment, it is preferred in this case if the radial shoulder is formed by a side wall of a radial recess in the shank section.

Such a radial recess can be produced cost-effectively, for example by rolling. In particular, production is possible by means of a double spinning machine.

In the case of the clip according to the invention, it is especially advantageous that the latching tongue extends in a direction away from the anti-rotation locking section. As a result, the clip can have a compact construction in the longitudinal direction. In addition, the clip can also be clipped onto the joining element without a tool, since the latching tongue can be designed in such a way that it is elastically deflected in the radial direction when being put onto the joining element.

The clip preferably has two or more latching tongues of this kind.

Furthermore, it is advantageous in this embodiment that the clip is fastened to the joining component in the region of a head of the joining component, that is to say at a distance from the joining section of the joining component. In particular, it is not necessary in this case for the clip to engage behind a flange section of the joining component. As a result, the number of tolerances of the fastening system according to the invention that are to be taken into account can also be reduced. In particular, the anti-rotation locking section can be located in largely any desired axial relative position with respect to the polygonal section.

According to a further preferred embodiment, the fastening section has a clamping section, by means of which the latching engagement between the latching tongue and the radial shoulder can be restrained.

This can ensure that the clip is fastened to the joining element in a rattle-proof manner.

In this case, it is especially preferred if the clamping section has at least one spring element elastically deformable in the longitudinal direction.

Such a spring element can engage, for example, on a top side of the flange section. It is especially preferred, however, if the spring element is arranged in such a way that it can engage on an end face of the joining element, in particular on an end face of the head of the joining element.

This can ensure that the latching tongue is pressed against the radial shoulder by the action of the spring element in order to thereby make possible rattle-proof seating of the clip on the joining element.

According to a further preferred embodiment, the clamping section is formed on a radial web which extends in a direction transversely to a latching direction, in which the latching tongue is movable.

In this embodiment, the radial web preferably extends transversely over the end face of the joining element. As a result, risk of injury during manual fastening of the clip can be prevented.

Furthermore, it is thereby possible in a simple manner to arrange one or more spring elements on a side of the radial web that points towards the joining element.

The design of such a radial web, which runs transversely to the latching direction, preferably enables the latching tongues to be reached through openings in the clip. As a result, it is possible, given a suitable shape of the latching tongues, to bend up said latching tongues radially on the clip after the fastening in order to remove the clip from the joining element essentially non-destructively.

Furthermore, it is preferred on the whole if the clip is designed like a hood, the rim of which forms the polygonal anti-rotation locking section.

In this embodiment, the clip can preferably be produced by an injection moulding tool without slides.

The following further features or advantages can be realized with the fastening method or fastening system according to the invention.

The term polygonal section or polygonal anti-rotation locking section is to be understood generally in the present context. This preferably concerns a many-sided configuration, such as, for example, a hexagon. However, it is also possible to select any other desired configurations deviating from a circular rotationally symmetrical shape in order to ensure the anti-rotation locking between the polygonal section, on the one hand, and the polygonal anti-rotation locking section or a holding device, on the other hand.

The article to be fastened to the component by means of the clip can be an elongated article, as mentioned above. However, it can also be a planar article, such as, for example, a mat or insulating element, which is secured by means of suitable projections to the clip in an orientation parallel to the surface of the component.

Due to the fact that the polygonal section preferably has a larger diameter than the shank section, good preliminary fixing can be realized when the clip is fitted manually on the joining element.

It goes without saying that suitable chamfers for forming insertion bevels can be formed on the top side of the shank section and/or on the top side of the polygonal section.

Furthermore, ribs having insertion bevels can be provided on the inner side of the clip in order to achieve radial fixing in the latching region.

The latching engagement between the latching tongue and the radial shoulder is preferably only dependent on the dimension between the end face and the radial shoulder, such that the latching engagement depends only on few tolerances.

The clip extends with its bottom end, that is to say with its polygonal anti-rotation locking section, preferably only to a certain height above the component. The fastening of the clip to the joining component is therefore substantially independent of the depth of the joint and independent of any material appearing in the process (e.g. weld bead), and so the configuration of the joint essentially has no effect on the fastening.

The adjustability of the fastening forces and holding forces can be realized relatively simply by adjusting the depth of longitudinal slots for forming the latching tongue.

The clip can be configured in such a way that the latching engagement between the latching tongue and the radial shoulder can be released again. Alternatively, the clip can also be configured in such a way that release from the fastening element is possible only by destroying the clip.

The fastening system according to the invention can be used, for example, for improved cable routing in the field of cable laying. Use as slip-on nuts is also possible.

Preliminary fixing of articles in a rotationally locked manner is also possible. For example, the article can be fixed to the clip before the clip is fastened to the joining element. In this embodiment, the clip, for example, can already be attached during the production of the cable harness.

It goes without saying that the abovementioned features and the features still to be explained below can be used not only in the respectively specified combination but rather also in other combinations or on their own without departing from the scope of the present claims.

Exemplary embodiments of the invention are shown in the drawing and are described in more detail below. In the drawing:
- Fig. 1: shows a schematic illustration of two alternative fastening systems according to the invention;
- Fig. 2: shows a schematic illustration of a joining system for carrying out the fastening method according to the invention;
- Fig. 3: shows a longitudinal sectional view through a further embodiment of a fastening system according to the invention;
- Fig. 4: shows a plan view of the fastening system in Fig. 3;
- Fig. 5: shows the fastening system in Fig. 3 when releasing the fastening;
- Fig. 6: shows a longitudinal sectional view through a further alternative embodiment of a fastening system according to the invention;
- Fig. 7: shows a longitudinal sectional view through a further embodiment of a fastening system according to the invention just before latching engagement is reached;
- Fig. 8: shows the fastening system in Fig. 7 after the latching engagement is established;
- Fig. 9: shows a perspective view of a further embodiment of a fastening system according to the invention;
- Fig. 10: shows a schematic illustration, comparable with Fig. 1, of two further embodiments of fastening systems according to the invention;
- Fig. 11: shows a sectional view along line XI in Fig. 10 relating to the fastening system shown on the left in Fig. 10; and
- Fig. 12: shows a schematic sectional view of a further embodiment of a fastening system according to the invention.

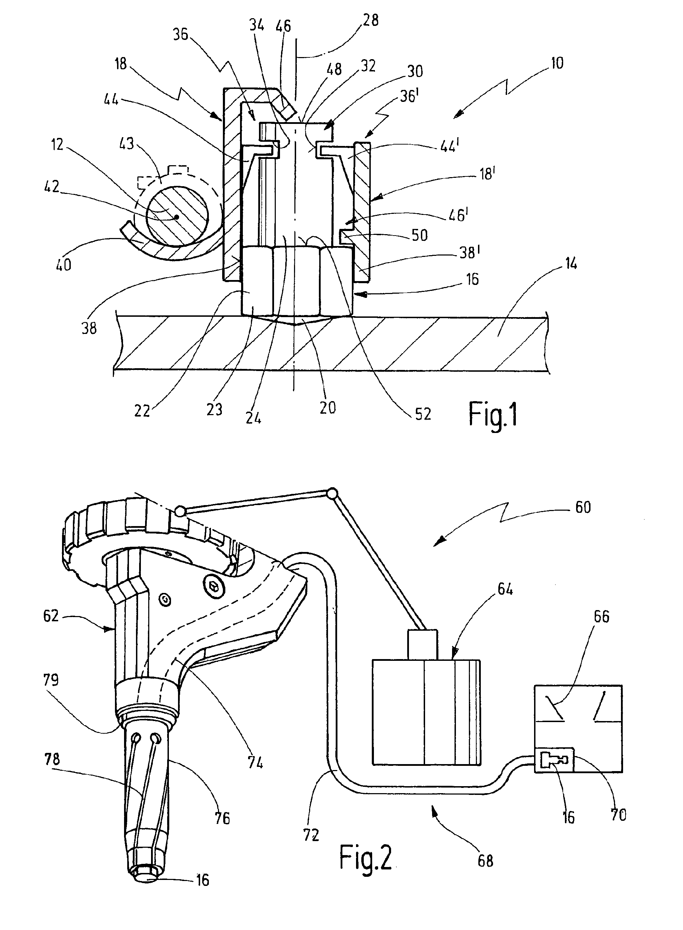

Two embodiments of fastening systems according to the invention are shown schematically and designated generally by 10 in Fig. 1. The one embodiment is shown on the left-hand side. The other embodiment is shown on the right-hand side of Fig. 1.

The fastening system 10 serves to fasten an elongated article 12, which is shown in cross section in Fig. 1, to a component 14, such as a body sheet. The fastening system 10 has a joining component in the form of a metallic stud 16. The stud 16 is joined to a surface of the component 14 by the stud welding process with access on one side. Furthermore, the fastening system 10 contains a plastic clip which is fastened to the stud 16.

The stud 16 has a joining section 20 which is connected to the component 14 in an integral manner in the illustration in Fig. 1. Furthermore, the stud 16 has a polygonal section 22 which directly adjoins the joining section 20 and which is formed on a flange section 23 of the stud 16. Furthermore, the stud 16 has a shank section 24. The stud 16 is designed to be generally rotationally symmetrical about a longitudinal axis 28 which is perpendicular to the surface of the component 14. The shank section 24 is formed on that side of the flange section 23 which is opposite the joining section 20 and has a smaller diameter than the flange section 23. A head 30 is formed on that longitudinal end of the shank section 24 which points away from the flange section 23, to be precise by a circumferential groove 32 which is formed in the region of the relevant longitudinal end in the shank section 24, for example by rolling.

The circumferential groove 32 has a radial shoulder 34 which points towards the head and which is oriented approximately perpendicularly to the longitudinal axis 28.

The clip 18, which is shown on the left-hand side in Fig. 1, is designed like a hood and has a fastening section 36 which acts on the head 30 of the stud 16. Furthermore, the clip 18 has a polygonal anti-rotation locking section 38 which is arranged concentrically to the polygonal section 22 in the clipped-on state and is formed on the inner circumference of the rim of the hood-shaped clip 18.

Furthermore, a securing section 40 for securing the article 12 is formed on the outer circumference of the hood-shaped clip 18. The securing section 40 extends, for example, over a certain distance along a securing axis 42, which in the illustration in Fig. 1 runs perpendicularly to the drawing plane and is skewed relative to the longitudinal axis 28. The article 12 is secured to the securing section 40 by a schematically indicated cable connector 43.

The fastening section 36 has two latching tongues 44. The latching tongues 44 extend in one direction obliquely upwards into the interior of the clip 18 and can be deflected elastically in the radial direction. When the clip 18 is pushed onto the stud 16, the latching tongues 44 are deflected radially until they engage in the circumferential groove 32, as shown in Fig. 1.

Furthermore, the fastening section 36 has a clamping section 46 which is formed by a top part of the hood-shaped clip 18. The clamping section 46 is deflected elastically when the latching tongues 44 engage in the circumferential groove 32, in such a way that the latching tongues 44 are pressed against the radial shoulder 34. Rattle-proof seating of the clip 18 on the joining component 16 is thereby realized.

The polygonal anti-rotation locking section 38 overlaps the polygonal section 22 and is generally freely displaceable in the longitudinal direction relative to the latter. In the fastened position, the anti-rotation locking section 38 is not displaceable relative to the polygonal section 22 at all or is only displaceable relative to it to a limited extent (e.g. to the extent of the elastic deformability of the clamping section 46). Furthermore, the bottom end of the clip 18 is at a distance from the joint or from the surface of the component 14 in the fastened state.

A modified embodiment of a fastening system 10 is shown on the right-hand side of Fig. 1. The stud 16 is identical to that in the fastening system described above. The clip 18' differs from the clip 18 in that a clamping section 46' is established which has at least one radially inwardly projecting spring lug 50 on the inner circumference of the clip 18, said spring lug 50 bearing on a top side 52 of the flange section 23 in the fastened state. In this embodiment, it is not necessary for the clip 18' to extend across the end face 48 of the stud 16 in a hood-like manner. However, the embodiment of a clip 18 shown on the left-hand side in Fig. 1 has the advantage that the fastening section 36 only depends on the dimensions of the head 30, and the distance between the head 30 and the flange section 23 does not have to be taken into account in terms of tolerances. In addition, the embodiment shown on the left in Fig. 1 has the advantage that it is very easy to fit, in particular that there is little risk of injury when fitting the clip 18 onto the stud 16. In both embodiments shown in Fig. 1, it is advantageous that tolerances of the joint between the stud 16 and the component 14 do not have to be taken into account.

Shown schematically in Fig. 2 is a joining system which is suitable for joining a stud 16 to the component 14. The joining system 60 has a joining head 62 which is operated in an automated manner and is attached, for example, to a robot 64. Furthermore, the joining system 60 contains a singulation device 66 with which studs 16 are singulated and a feed system 68 for feeding studs 16 from the singulation device 66 to the joining head 62. The feed system 68 contains a compressed-air source 70 which is arranged in the region of the singulation device 66, a feed tube 72 which runs from the compressed-air source 70 to the joining head 62, and a passage 74 arranged in the joining head 62. The joining head 62 has a holding device 76 for a stud 16. The holding device 76 is formed by a plurality of holding tongues which extend substantially in the longitudinal direction, are spaced apart by slots and can be expanded radially. In this case, the slots 78 run helically at least in sections.

To feed a singulated stud 16, a blast of compressed air is exerted by the compressed-air source 70, such that the stud 16 is inserted through the feed tube 72 and the passage 74 from the rear into the holding device 76. By means of a punch (not shown in any more detail in Fig. 2), the stud 16 can then be pressed so far forward through the holding device 76 until the joining section 20 projects from the holding device 76. In this front region, the holding tongues of the holding device 76 are designed in such a way that they can hold the stud in a defined positional orientation. For example, the number of holding tongues corresponds to the number of sides of the polygonal section 22. The helical course of the longitudinal slots 78 ensures that the stud 16 is accommodated in the correct position in the holding device 76. The holding device 76 in turn is attached to the joining head 62 in a predetermined positional relationship, for example by means of a suitable lug 79.

To carry out the method according to the invention, first of all a stud 16 is inserted into the holding device 76, the stud 16 having a defined positional orientation with respect to the joining head 62. The joining head 62 is then activated by means of the robot in such a way that the stud 16 is joined to the component 14 in a predetermined positional orientation (as viewed in the direction of rotation).

The joining can be effected by stud welding provided the component 14 and the stud 16 are made of metal. However, the joining operation can also be carried out by thermoplastic welding or by adhesive bonding.

A clip 18 is then pushed onto the stud 16, to be precise in a predetermined positional orientation with respect to the stud 16, until latching engagement between the latching tongue 44 and the radial shoulder 34 is established. As a result, it is possible to determine the positional orientation of the securing axis 42 of the securing section 40 in a defined manner. The article 12 can then be secured to the securing section 40. Alternatively, the clip 18 is secured beforehand to the article 12 by means of the securing section 40 and is clipped, together with the article 12 pre-fitted in this way, onto the stud 16.

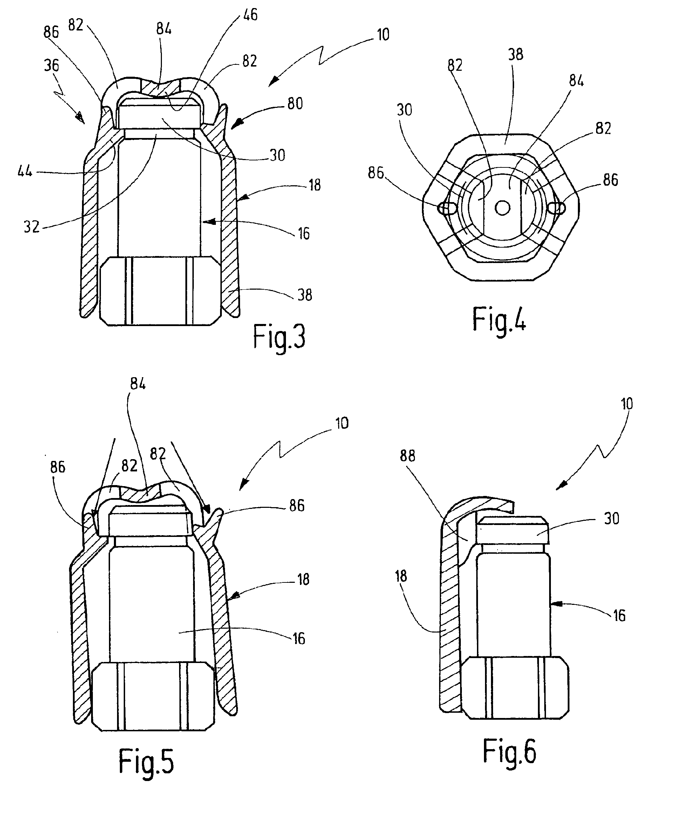

Further embodiments of fastening systems according to the invention are shown in the following Figures 3 to 12. With regard to construction and functioning, said fastening systems generally correspond to the fastening system shown on the left in Fig. 1. The same elements are therefore designated with the same reference numerals. The differences are essentially explained below.

A first variant of a fastening system is shown in Figures 3 to 5.

Fig. 3 firstly shows that the latching tongues latch in the circumferential groove 32 in a substantially radially oriented latching direction 80. Furthermore, at the clip 18, a clamping section 46 is formed on a radial web 84 which is formed by two openings 82 in the clip 18 that are arranged on opposite sides of the longitudinal axis 28. In this case, the radial web extends transversely over the head 30, to be precise in a direction transverse to the latching direction 80 of the latching tongues 44. Formed on the top side of the latching tongues 44 are tool application lugs 86 which enable the latching tongues 44 to be bent up radially through the openings 82 by means of the engagement of a tool in order to release the clip 18 from the stud 16, as indicated schematically in Fig. 5.

In the embodiment of a fastening system shown in Fig. 6, provision is made that guide ribs 88 can be formed on the inner side of the clip 18, and these guide ribs 88 can provide for centring of the clip in the region of the head of the stud 16. Such guide ribs 88 can be formed in all the abovementioned embodiments.

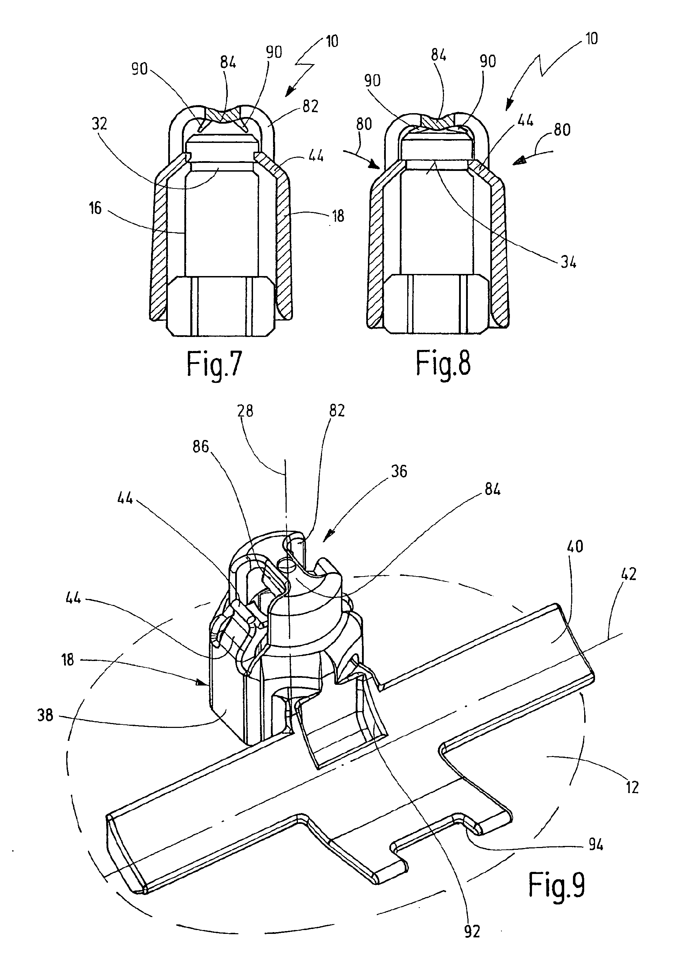

A further embodiment of a fastening system is shown in Figures 7 and 8. With regard to construction and functioning, the fastening system 10 corresponds generally to the fastening system 10 in Figures 3 to 5. In the fastening system 10 in Figures 7 and 8, however, a plurality of spring elements 90 elastically deformable in the axial direction are formed on the underside of the radial web 84. In Fig. 7, these spring elements 90 are shown in a relaxed state, which exists before the latching engagement of the latching tongues 44 in the circumferential groove 32 is established. As soon as the latching tongues 44 are latched in the circumferential groove 32, as shown in Fig. 8, the spring elements 90 are elastically deformed and consequently press the latching tongues 44 against the radial shoulder 34 and thus provide for rattle-proof seating.

A further embodiment of a fastening system according to the invention is shown in Fig. 9. With regard to construction and functioning, the fastening system 10 in Fig. 9 generally corresponds to the fastening system 10 in Figures 7 and 8. However, it can be seen in Fig. 9 that a securing section 40 is formed laterally on the clip 18 (integrally formed in one piece on the basic body of the clip 18), said securing section 40 defining a securing axis 42 which is skewed relative to the longitudinal axis 28.

Furthermore, openings for accommodating a cable connector or the like are shown at 92 and 94 in the securing section 40.

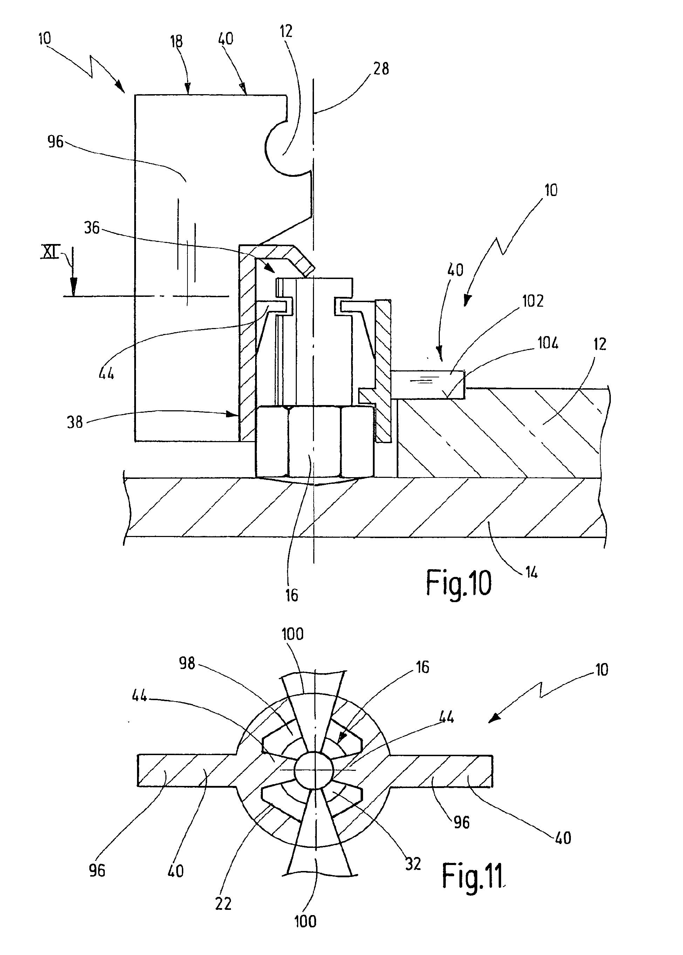

Two further alternative embodiments of fastening systems 10 are shown in Fig. 10. A sectional view along line XI in Fig. 10 relating to the fastening system 10 shown on the left-hand side in Fig. 10 is shown in Fig. 11.

In the fastening system 10 shown in Fig. 10 on the left and in Fig. 11, the clip 18 has a plate section 96 which projects radially relative to the hood-shaped basic body and on which the securing section 40 for fastening an article 12 is formed.

In this embodiment, the clip 18 can be pre-fitted on the stud 16 for forming a pre-assembled fastening arrangement. As shown in Fig. 11, the clip 18 in this case has openings 98 which are offset from the latching tongues 44 in the circumferential direction. Via the openings 98, a holding device 100 of a joining head 62 can act on the head 30 of the stud 16, while the clip 18 is already fitted on the stud 16.

It is also generally possible in the other embodiments of fastening systems shown above to provide such a pre-assembled fastening arrangement, which is joined in combination to the component 14.

The plate section 96 can form a simple holder, in a way in which it can otherwise be welded on the end face directly onto a sheet when made of metal. In this case, however, the holder is formed by the plate section 96 of the clip 18, which is also securely fixed to the joining component 16 in the circumferential direction.

In this embodiment, the holding device 100 can be designed, for example, in the form of pliers, but is in any case different from the holding device 76 shown in Fig. 2.

Yet another alternative fastening system is shown on the right-hand side in Fig. 10. In this case, one or more tabs project radially outwards from the clip 18. The tabs 102 are designed for securing a planar workpiece, such as a mat 12 or the like, a further fastening element and/or a further clip part between the tabs 102 and the surface of the component 14.

The tab(s) 102 in this case can engage in a suitable recess 104 of the article 12 in order to also secure the latter in the correct position in the circumferential direction.

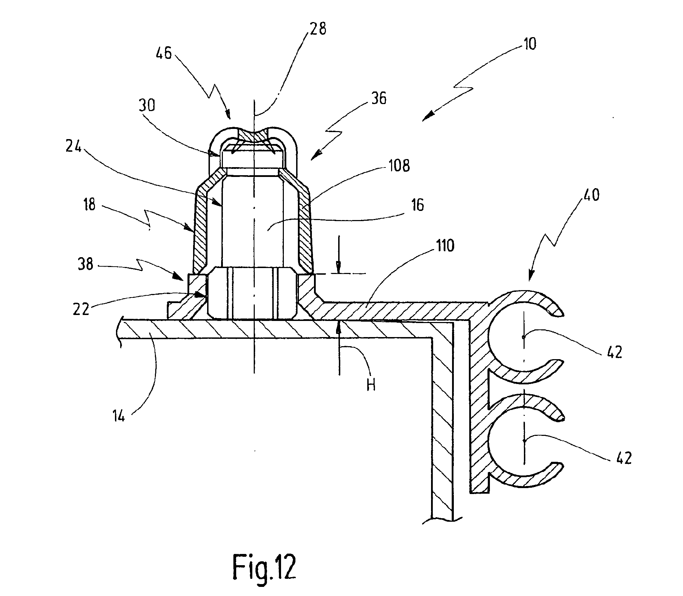

A further embodiment of a fastening system 10 is shown in Fig. 12. In this embodiment, the clip 18 is of two-part design and has a first clip part 108 and a second clip part 110. Formed on the first clip part 108 is a fastening section 36, for example like the fastening section shown in Figs 7 and 8. A polygonal anti-rotation locking section 38 and a securing section 40 are formed on the second clip part 108, which is arranged in the longitudinal direction between the first clip part 108 and the component 14.

The clamping section 46 is formed on the first clip part 108 and, as in the above embodiments, provides for rattle-proof seating of the first clip part 108 on the stud 16. Additionally or alternatively thereto, secure seating of the first clip part 108 on the stud 16 can be ensured by suitable selection of the height H of the anti-rotation locking section 38 of the second clip. In this case, the tolerance of the joint between stud 16 and component 14 should preferably be taken into account.

As shown in Fig. 12, the first clip part 108 extends, in the fastened state, in the longitudinal direction from the head 30 approximately up to the boundary between shank section 24 and polygonal section 22 of the stud 16. In this case, a bottom end of the first clip part preferably presses from above onto a top section of the second clip part 110.

The securing section 40 can be integrally formed directly on the anti-rotation locking section 38 or can be connected to the latter via an intermediate section, which can be designed in an L shape, for example, as shown in Fig. 12.

## Claims

1. Method for securing an article (12) to a component (14) in a defined positional orientation, comprising the steps:
- joining a joining element (16) to a surface of the component (14),
- fastening a clip (18) to the joining element (16), and
- fixing the article (12) to the clip (18),
wherein the joining element (16) has a polygonal section (22) and is joined to the surface of the component (14), and
wherein the clip (18) has a polygonal anti-rotation locking section (38) and can be fastened to the joining element (16) in such a way that an article (12) to be fixed to the clip (18) can be secured to the component (14) in a defined positional orientation
**characterized in that**
the joining element (16), during the joining operation, is held on a joining head (62) in a position defined by the polygonal section (22).

2. Fastening system (10) for securing an article (12) to a component (14), in particular for carrying out the method according to Claim 1, comprising a joining element (16) which is generally rotationally symmetrical about a longitudinal axis (28) and which has a polygonal section (22) and can be joined to the component (14) in the longitudinal direction, and comprising a clip (18) which has a fastening section (36) for fastening the clip (18) to the joining element (16), a polygonal anti-rotation locking section (38) for bearing against the polygonal section (22) in a rotationally locked manner, and a securing section (40) for securing the article (12) to the clip (18), wherein the joining element (16) has a head (30) which is at a distance from the polygonal section (22) in the longitudinal direction,
**characterized in that**
the fastening section (36) of the clip (18) engages on the head (30) of the joining element (16).

3. Fastening system according to Claim 2, wherein the securing section (40) is designed to secure the article (12) to the clip (18) in a securing axis (42) which runs transversely to the longitudinal axis (28) of the joining element (16).

4. Joining element for a fastening system according to Claim 2 or 3, in particular in the form of a stud, wherein the joining element (16) is designed as a joining element (16) which is generally rotationally symmetrical about a longitudinal axis (28) and which has at one longitudinal end a joining section (20), by means of which the joining element (16) can be joined to a component (14), and which furthermore has a head (30) at the other longitudinal end and which has a polygonal section (22) between the longitudinal ends, **characterized in that** the head (30) has a radial shoulder (34) for fastening a clip (18).

5. Joining element according to Claim 4, comprising a flange section (23), on the underside of which the joining section (20) is formed, and comprising a shank section (24) which has a smaller diameter than the flange section (23), wherein the head (30) is formed on the shank section (24).

6. Joining element according to Claim 5, wherein the radial shoulder (34) is formed by a side wall of a radial recess (32) in the shank section (24).

7. Clip (18) for a fastening system according to Claim 2 or 3 and/or for clipping onto a joining element according to one of Claims 4 to 6, wherein the clip (18) has a polygonal anti-rotation locking section (38) and a fastening section (36), wherein the fastening section (36) has at least one latching tongue (44) which extends in a direction away from the anti-rotation locking section (38),
**characterized in that**
the latching tongue (44) of the fastening section (36) is designed to engage behind a radial shoulder (34) of an associated joining element (16).

8. Clip according to Claim 7, wherein the fastening section (36) has a clamping section (46), by means of which the latching engagement between the latching tongue (44) and the radial shoulder (34) can be restrained.

9. Clip according to Claim 8, wherein the clamping section (46) has at least one spring element (50; 84; 90) elastically deformable in the longitudinal direction.

10. Clip according to Claim 9, wherein the spring element (84; 90) is arranged in such a way that it can engage on an end face (48) of the joining element (16).

11. Clip according to Claim 9 or 10, wherein the clamping section (46) is formed on a radial web (84; 90) which extends in a direction transversely to a latching direction (80), in which the latching tongue (44) is movable.

12. Clip according to one of Claims 7 to 11, wherein the clip (18) is designed like a hood, the rim of which forms the polygonal anti-rotation locking section (38).

## Patentansprüche

1. Verfahren zum Festlegen eines Gegenstandes (12) in einer definierten Lageorientierung an einem Bauteil (14), mit den Schritten:
- Fügen eines Fügelementes (16) auf eine Oberfläche des Bauteils (14),
- Befestigen eines Clips (18) an dem Fügeelement (16), und
- Fixieren des Gegenstandes (12) an dem Clip (18),
wobei das Fügeelement (16) einen Polygonabschnitt (22) aufweist und auf die Oberfläche des Bauteils (14) gefügt wird, und
wobei der Clip (18) einen polygonalen Verdrehsicherungsabschnitt (38) aufweist und derart an dem Fügeelement (16) befestigbar ist, so dass ein an dem Clip (18) zu fixierender Gegenstand (12) in der definierten Lageorientierung an dem Bauteil (14) festlegbar ist,
**dadurch gekennzeichnet, dass**
das Fügeelement (16) bei dem Fügevorgang in einer durch den Polygonabschnitt (22) definierten Position an einem Fügekopf (62) gehalten wird.

2. Befestigungssystem (10) zum Festlegen eines Gegenstandes (12) an einem Bauteil (14), insbesondere zur Durchführung des Verfahrens nach Anspruch 1, mit einem um eine Längsachse (28) generell rotationssymmetrischen Fügeelement (16), das einen Polygonabschnitt (22) aufweist und in Längsrichtung auf das Bauteil (14) fügbar ist, und mit einem Clip (18), der einen Befestigungsabschnitt (36) zum Befestigen des Clips (18) an dem Fügeelement (16), einen polygonalen Verdrehsicherungsabschnitt (38) zur verdrehsicheren Anlage an dem Polygonabschnitt (22) und einen Festlegungsabschnitt (40) zum Festlegen des Gegenstandes (12) an dem Clip (18) aufweist, wobei das Fügeelement (16) einen in Längsrichtung von dem Polygonabschnitt (22) beabstandeten Kopf (30) aufweist,
**dadurch gekennzeichnet, dass**
der Befestigungsabschnitt (36) des Clips (18) an dem Kopf (30) des Fügeelementes (16) angreift.

3. Befestigungssystem nach Anspruch 2, wobei der Festlegungsabschnitt (40) dazu ausgebildet ist, den Gegenstand (12) in einer Festlegungsachse (42) an dem Clip (18) festzulegen, die quer verläuft zu der Längsachse (28) des Fügeelementes (16).

4. Fügeelement für ein Befestigungssystem nach Anspruch 2 oder 3, insbesondere in Form eines Bolzens, wobei das Fügeelement (16) als um eine Längsachse (28) generell rotationssymmetrisches Fügeelement (16) ausgebildet ist, das an einem Längsende einen Fügeabschnitt (20) aufweist, mittels dessen das Fügeelement (16) auf ein Bauteil (14) fügbar ist, das ferner an dem anderen Längsende einen Kopf (30) aufweist, und das zwischen den Längsenden einen Polygonabschnitt (22) aufweist, **dadurch gekennzeichnet, dass** der Kopf (30) eine Radialschulter (34) zum Befestigen eines Clips (18) aufweist.

5. Fügeelement nach Anspruch 4, mit einem Flanschabschnitt (23), an dessen Unterseite der Fügeabschnitt (20) ausgebildet ist, und mit einem Schaftabschnitt (24), der einen kleineren Durchmesser als der Flanschabschnitt (23) aufweist, wobei der Kopf (30) an dem Schaftabschnitt (24) ausgebildet ist.

6. Fügeelement nach Anspruch 5, wobei die Radialschulter (34) durch eine Seitenwand einer Radialausnehmung (32) in dem Schaftabschnitt (24) gebildet ist.

7. Clip (18) für ein Befestigungssystem nach Anspruch 2 oder 3 und/oder zum Aufclipsen auf ein Fügeelement nach einem der Ansprüche 4 bis 6, wobei der Clip (18) einen polygonalen Verdrehsicherungsabschnitt (38) und einen Befestigungsabschnitt (36) aufweist, wobei der Befestigungsabschnitt (36) wenigstens eine Rastzunge (44) aufweist, die sich in einer Richtung weg von dem Verdrehsicherungsabschnitt (38) erstreckt,
**dadurch gekennzeichnet, dass**
die Rastzunge (44) des Befestigungsabschnittes (36) dazu ausgelegt ist, eine Radialschulter (34) eines zugehörigen Fügeelementes (16) zu hintergreifen.

8. Clip nach Anspruch 7, wobei der Befestigungsabschnitt (36) einen Spannabschnitt (46) aufweist, mittels dessen der Rasteingriff zwischen der Rastzunge (44) und der Radialschulter (34) verspannt werden kann.

9. Clip nach Anspruch 8, wobei der Spannabschnitt (44) wenigstens ein in Längsrichtung elastisch verformbares Federelement (50; 84; 90) aufweist.

10. Clip nach Anspruch 9, wobei das Federelement (84; 90) so angeordnet ist, dass es an einer Stirnseite (48) des Fügeelementes (16) angreifen kann.

11. Clip nach Anspruch 9 oder 10, wobei der Spannabschnitt (46) an einem Radialsteg (84; 90) ausgebildet ist, der sich in einer Richtung quer zu einer Rastrichtung (80) erstreckt, in der die Rastzunge (44) beweglich ist.

12. Clip nach einem der Ansprüche 7 bis 11, wobei der Clip (18) nach der Art einer Haube ausgebildet ist, deren Rand den polygonen Verdrehsicherungsabschnitt (38) bildet.

## Revendications

1. Procédé pour fixer un article (12) à un composant (14) dans une orientation de positionnement définie, comprenant les étapes de :
- liaison d'un élément de liaison (16) à une surface du composant (14),
- assujettissement d'une attache (18) à l'élément de liaison (16) et
- fixation de l'article (12) à l'attache (18),
l'élément de liaison (16) ayant une section polygonale (22) et étant relié à la surface du composant (14), et
l'attache (18) ayant une section de blocage antirotation polygonale (38) et pouvant être assujettie à l'élément de liaison (16) d'une manière telle qu'un article (12) devant être fixé à l'attache (18) puisse être fixé au composant (14) suivant une orientation de positionnement définie,
**caractérisé en ce que**
l'élément de liaison (16), lors de l'opération de liaison, est maintenu sur une tête de liaison (62) dans une position définie par la section polygonale (22).

2. Système d'assujettissement (10) pour fixer un article (12) à un composant (14), en particulier pour mettre en oeuvre le procédé selon la revendication 1, comprenant un élément de liaison (16) qui présente généralement une symétrie de révolution autour d'un axe longitudinal (28) et qui a une section polygonale (22) et peut être relié au composant (14) dans la direction longitudinale, et comprenant une attache (18) qui a une section d'assujettissement (36) pour assujettir l'attache (18) à l'élément de liaison (16), une section de blocage antirotation polygonale (38) destinée à s'appuyer contre la section polygonale (22) d'une manière bloquée en rotation, et une section de fixation (40) pour fixer l'article (12) à l'attache (18), l'élément de liaison (16) ayant une tête (30) qui est située à distance de la section polygonale (22) dans la direction longitudinale,
**caractérisé en ce que**
la section d'assujettissement (36) de l'attache (18) vient en prise sur la tête (30) de l'élément de liaison (16).

3. Système d'assujettissement selon la revendication 2, dans lequel la section de fixation (40) est conçue pour fixer l'article (12) à l'attache (18) suivant un axe de fixation (42) qui s'étend transversalement à l'axe longitudinal (28) de l'élément de liaison (16).

4. Élément de liaison pour un système d'assujettissement selon la revendication 2 ou 3, en particulier en forme de goujon, l'élément de liaison (16) étant conçu en tant qu'élément de liaison (16) qui présente généralement une symétrie de révolution atour d'un axe longitudinal (28) et qui a, à une extrémité longitudinale, une section de liaison (20) au moyen de laquelle l'élément de liaison (16) peut être relié à un composant (14), et qui a en outre une tête (30) à l'autre extrémité longitudinale et qui a une section polygonale (22) entre les extrémité longitudinales, **caractérisé en ce que** la tête (30) a un épaulement radial (34) pour assujettir une attache (18).

5. Élément de liaison selon la revendication 4, comprenant une section de collet (23), sur le côté inférieur de laquelle la section de liaison (20) est formée, et comprenant une section de tige (24) qui présente un plus petit diamètre que la section de collet (23), la tête (30) étant formée sur la section de tige (24).

6. Élément de liaison selon la revendication 5, dans lequel l'épaulement radial (34) est formé par une paroi latérale d'un renfoncement radial (32) dans la section de tige (24).

7. Attache (18) pour un système d'assujettissement selon la revendication 2 ou 3 et/ou pour l'enclipsage sur un élément de liaison selon l'une des revendications 4 à 6, l'attache (18) ayant une section de blocage antirotation polygonale (38) et une section d'assujettissement (36), la section d'assujettissement (36) ayant au moins une languette d'encliquetage (44) qui s'étend dans une direction à l'écart de la section de blocage antirotation (38),
**caractérisée en ce que**
la languette d'encliquetage (44) de la section d'assujettissement (36) est conçue pour venir en prise derrière un épaulement radical (34) d'un élément de liaison associé (16).

8. Attache selon la revendication 7, dans laquelle la section d'assujettissement (36) a une section de serrage (46) au moyen de laquelle l'entrée en prise par encliquetage entre la languette d'encliquetage (44) et l'épaulement radial (34) peut être contrainte.

9. Attache selon la revendication 8, dans laquell la section de serrage (46) a au moins un élément de ressort (50 ; 84 ; 90) déformable élastiquement dans la direction longitudinale.

10. Attache selon la revendication 9, dans laquelle l'élément de ressort (84 ; 90) est agencé d'une manière telle qu'il peut venir en prise sur une face d'extrémité (48) de l'élément de liaison (16).

11. Attache selon la revendication 9 ou 10, dans laquelle la section de serrage (46) est formée sur une nervure radiale (84 ; 90) qui s'étend dans une direction transversalement à une direction d'encliquetage (80) dans laquelle la languette d'encliquetage (44) est mobile.

12. Attache selon l'une des revendications 7 à 11, dans laquelle l'attache (18) est conçue comme un capuchon, le bord duquel forme la section de blocage anitrotation polygonale (38).
